# EUROPEAN PATENT SPECIFICATION

(11) **EP 2 962 881 B1**
(45) Date of publication and mention of the grant of the patent: **25.09.2019**
(21) Application number: 15158137.8
(22) Date of filing: 09.03.2015
(51) Int. Cl.: B60J 7/08

(54) **Vehicle mountable covering system**
FAHRZEUGMONTIERBARES ABDECKSYSTEM
SYSTÈME DE RECOUVREMENT À MONTER SUR UN VÉHICULE

(30) Priority: 07.03.2014 GB 201404069; 12.03.2014 GB 201404389; 29.07.2014 GB 201413398
(43) Date of publication of application: 06.01.2016
(73) Proprietor: Eclats Holding Limited, Aylesford, Kent ME20 7XE (GB)
(72) Inventor: Hines, Steve, Aylesford, Kent ME20 7XE (GB)
(74) Representative: Fry, David John

(56) References cited:
- EP-A1- 0 581 512
- EP-A1- 1 070 617
- WO-A2-2004/080742
- NL-C2- 1 032 225

## Description

### Field of the Invention

This invention relates to a vehicle-mountable covering system, particularly, though not exclusively, for covering any type of open top container, skip or truck body.

### Background of the Invention

Open top containers, skips, truck bodies and the like need to be covered when on a vehicle to contain loose materials like sand or rubbish. This covering process is made safer, faster and more efficient by using an covering system mounted upon the vehicle or trailer to manipulate a flexible cover.

An effective covering system should be one that is easily operated by the truck driver, preferably from ground level, so as to securely cover and uncover various sized containers safely and quickly.

WO 2004/080742 discloses a tarp covering system for an open top container of a vehicle.

### Summary of the Invention

A first aspect of the invention provides a vehicle-mountable covering system comprising a control system and a framework connected to the control system, the framework being comprised of first and second arms with a rotatable spool mounted to the arms for carrying a flexible cover, wherein the control system is operable to mechanically move the arms apart from each other from a stowed position to an operating position, and to move the arms about a first pivot axis in either a forwards or rearwards direction in said operating position.

The first pivot axis is preferably generally parallel to a longitudinal axis of the rotatable spool.

The covering system may be arranged such that when the arms are in the stowed position, they have a mounted width of no more than 2550 mm.

Each arm comprises at least two articulately-connected portions and an interconnecting cylinder for controlling the position of the arm portions with respect to one another, the cylinder being controlled during movement of the arms in the forwards or rearwards direction so as to move the arm portions relative to each other.

When in the stowed position, the arms may be arranged to substantially assume an L-shape form, and are controlled by their respective cylinder to straighten as they move forwards or rearwards in the operating position.

Movement of the arms from the stowed position to the operating position may be effected by respective cylinders, e.g. hydraulic cylinders. Each cylinder may be mounted between first and second telescopic members comprised of a fixed portion and a movable portion, the movable arm portions being connected to a framework arm.

The rotatable spool is mounted on a crossbar, which at each end has a telescopic connection to a respective one of the framework arms. Each end of the crossbar is hollow and houses a cylinder having a movable part connected to a respective one of the framework arms and is arranged to move the arm outwards from the stowed position to the operating position. The rotatable spool itself may be telescopically connected to the arms.

When mounted on a vehicle carrying a container, skip or truck body, the arms when in the stowed position may be positioned under, and in front of, or under and behind, the location of an open top container or truck body.

The framework may be arranged such that, in use, the flexible cover is unfurled or retracted once the unattached end of the flexible cover has been attached to a fixed point.

The invention provides a method of operating a covering system according to any preceding definition, comprising issuing a signal to the control system to extend the framework arms from a first position to a second position at the opposing end of the container or truck body, attaching the unattached end of a flexible cover to a fixed point, reversing the framework back to the first position thus allowing the permanently mounted rotatable spool to unfurl a flexible cover over the open top container or truck body and then retracting the framework widthways to the stowed position within a mounted width.

Each arm is may be hinged so that when in the stowed position, they form an approximate L-shape with part of each arm being substantially horizontal and underneath the location of the container or truck body, and other part of each arm being substantially vertical and positioned in front of, or behind, the container or truck body.

The arms may be selectively movable widthways by means of a pair of lower and a pair of upper hydraulic cylinders, each cylinder having a movable part connected to one of the framework arms, the upper cylinders being housed within a crossbar extending between the arms.

Each of the upper and lower pairs of hydraulic cylinders may be operated by a single control system that causes each to move in sympathy.

Each lateral arm may be connected to a lower mechanism including a lower cylinder configured to extend and retract the arm widthways, and a telescopic support arrangement, the support arrangement being comprised of one or more telescopically-arranged sections positioned adjacent the lower cylinder and connected to the arm, the telescopic section(s) extending and retracting with movement of the lower cylinder. A pair of telescopically-arranged sections may be provided, one either side of the lower cylinder. The telescopically-arranged sections may be box-like, square or rectangular in cross-section. The or each telescopically arranged section may comprise a first reinforced part for being connected underneath the container or truck body, and a second part located within the first part one end of which is connected to a lateral arm of the framework. Two such telescopic support arrangements may be provided in an opposed configuration.

A further aspect provides a covering system for open top containers or truck bodies comprising of a framework arranged in use to pivot about a first axis in a forward and reverse motion, and also to extend and retract widthways between respective operating and stowed positions, in order to manipulate a permanently mounted rotatable spool which in use is configured to allow both unfurling and retracting of a flexible cover.

The framework may be arranged such that when in the stowed position it has a mounted width of no more than 2550 mm.

The framework may be arranged such that when in the stowed position it is under, and in front of, or under and behind, an open top container or truck body.

The framework may be arranged such that, in use, the flexible cover is unfurled or retracted once the unattached end of the flexible cover has been attached to a fixed point.

A further aspect provides a covering system for open top containers of truck bodies, comprising a framework formed by a pair of opposed lateral arms having at or near an upper end a rotatable spool for carrying a flexible cover that extends between said arms, wherein the arms are selectively movable in back and forth directions between first and second positions about a pivoting axis generally parallel to the spool, and selectively movable towards each other in a transverse direction from the first position to a stowed position so that the separation between the arms is reduced.

Each arm may be hinged so that when in the stowed position, they form an approximate L- shape with part of each arm being substantially horizontal and underneath the location of the container or truck body, and other part of each arm being substantially vertical and positioned in front of, or behind, the container or truck body.

### Brief Description of the Drawings

The invention will now be described by way of non-limiting example with reference to the accompanying drawings, in which:
Figure 1 is a perspective view of an open top container and a covering system according to an embodiment of the invention;
Figure 2 is a side view of the Figure 1 embodiment;
Figure 3 is a top plan view of the Figure 1 embodiment;
Figure 4 is a top plan view of the Figure 1 embodiment in a stowed position;
Figure 5 is a perspective view of the Figure 1 embodiment during an operational covering cycle;
Figure 6 is a perspective view of the Figure 1 embodiment at the end of the operational covering cycle;
Figure 7 is a side view of an embodiment in which the system is stowed at the other end of the container or truck body;
Figure 8 is a plan view of a lower base structure mechanism of the covering system;
Figures 9a and 9b are front views of a crossbar mechanism of the covering system;
Figures 10a to 10f are side views of a second embodiment covering system used on a skip loader;
Figures 11a and 11b are rear end views of the Figure 10 embodiment respectively showing stowed and operational modes of the covering system; and
Figure 12 is a side view of a third embodiment covering system used on a side tipper.

### Detailed Description of Preferred Embodiment(s)

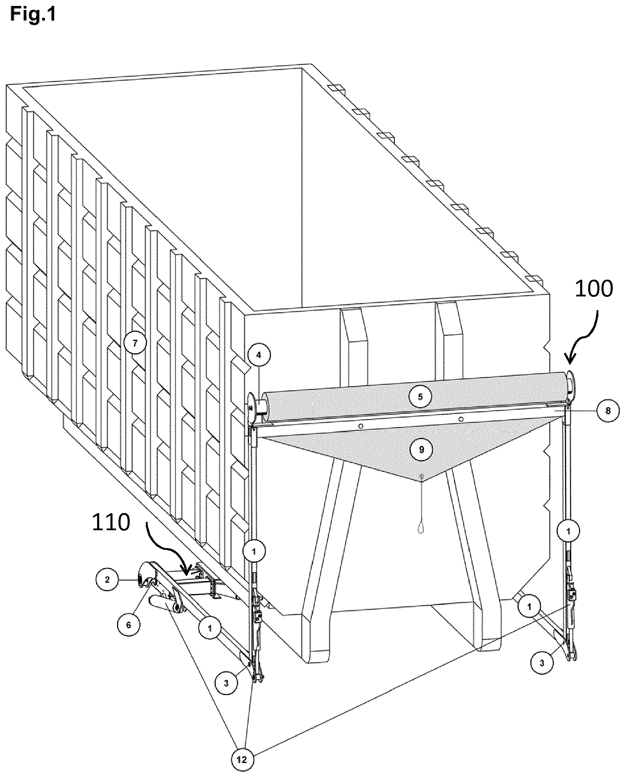

Figures 1 to 9 show a first embodiment of a vehicle-mountable system (hereafter "covering system") 100 for covering an open top container or truck body 7, which is also shown in some of the figures. The covering system 100 is provided as a separate system which can be retro-fitted onto vehicles in order to provide a means of safely securing a flexible cover 5, shown in Figure 1 wound around a spool 4, over the open area of the container from ground level, and with the ability to adjust in length to suit a variety of different-sized containers or loads which the truck or trailer may collect.

Referring to Figure 1, the covering system 100 comprises a framework formed of a pair of lateral arms 1, each pivotally connected to a respective base structure 110 only one of which is visible. The arms 1 are therefore able to rotate about a pivot axis 2 transverse to the longitudinal extent of the container 7 in order to move forwards and backwards. Each arm 1 is formed of two portions, which articulate about a further intermediate pivot joint 3, under the control of a respective hydraulic cylinder 12. A different hydraulic cylinder 12 is also connected between each lower arm portion and its associated base structure 110, which cylinder effects the rotation of the arms back and forth about axis 2.

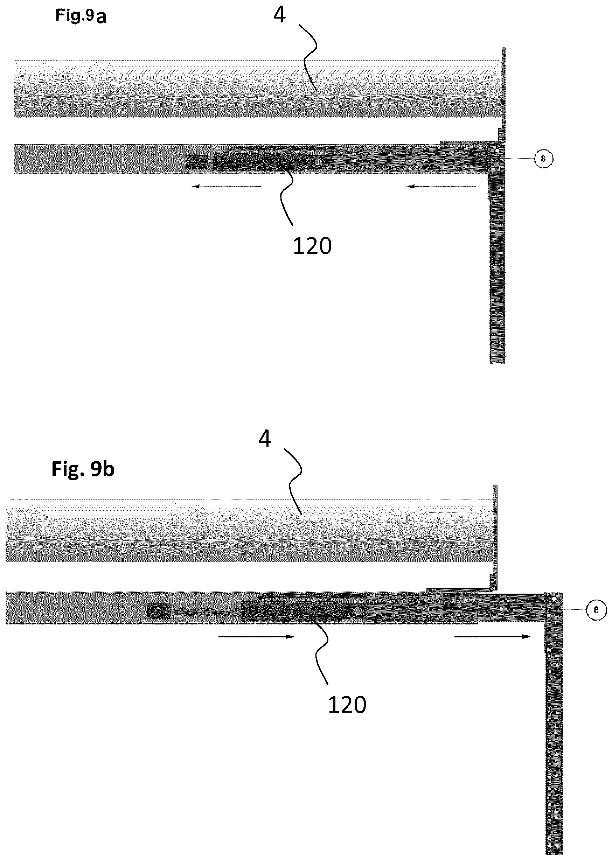

Between the arms 1 is a box-like crossbar 8 telescopically connected to the said arms by means of a pair of hydraulic cylinders (shown in Figure 9). Mounted above the crossbar 8 is the rotatable spool 5, which carries the wound cover 5. The spool 5 is also telescopically connected, having hollow end portions into which are located a respective member that supports the spool in both the stowed and operating positions.

The base structures 110 are in use connected to the vehicle by welding or an alternative fixing method. As will be explained below, the base structures 110 each comprise a frame formed of two telescopic base supports, between which is a parallel hydraulic cylinder 6, the rod of which connects to its associated lateral arm 1 to move it outwards or inwards depending on mode of operation. The cylinders 6 of each base structure 110 are controlled in sympathy to both widen and narrow the separation between the arms 1, as will be explained.

Furthermore, a cylinder (not visible in Figure 1) is fixed within each end of the crossbar 8 (which ends are hollow to allow location of said cylinders and associated cabling), the movable parts of which connect to the arms to permit stable separation and narrowing of the arms 1 at their upper ends in controlled sympathy with the moevment effected by the base structure cylinders 6.

In overview, an electro-mechanical control system is configured to control placement and/or movement of the arms 1 in different modes of operation, namely a stowed mode and an operational mode.

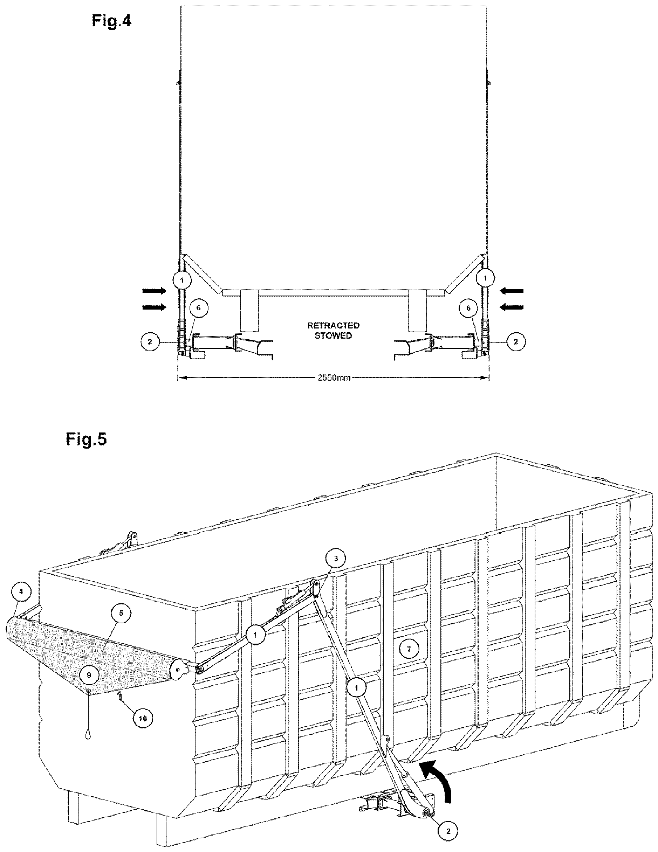

Figure 4 show the arms 1 when placed in a first stowed mode, where it is seen that the arms 1 assume a general L-shape towards the front (with respect to the vehicle and container) with the lower arm portion substantially horizontal and the upper arm portion substantially vertical. As is shown in Figure 4, the arms 1 are retracted, or narrowed together to a predetermined separation, which in practice means that the lower portions can locate beneath the container 7 with the outermost edges of the arms being in this example no greater than 2550mm apart.

In the operational mode, which occurs when the container 7 is to be covered, the following phases occur.

First, the arms 1 are separated outwards to an widened position by the cylinders 6 in the base structure 110 and those in the crossbar 8. This phase is indicated in Figures 1 to 3.

Next, the arms 1 are moved rearwards by the cylinders 12 in a particular cycle, which involves straightening the upper and lower arm portions to ensure that the crossbar 8 and spool 4 passes over the container 7 before reaching the position shown in Figure 5.

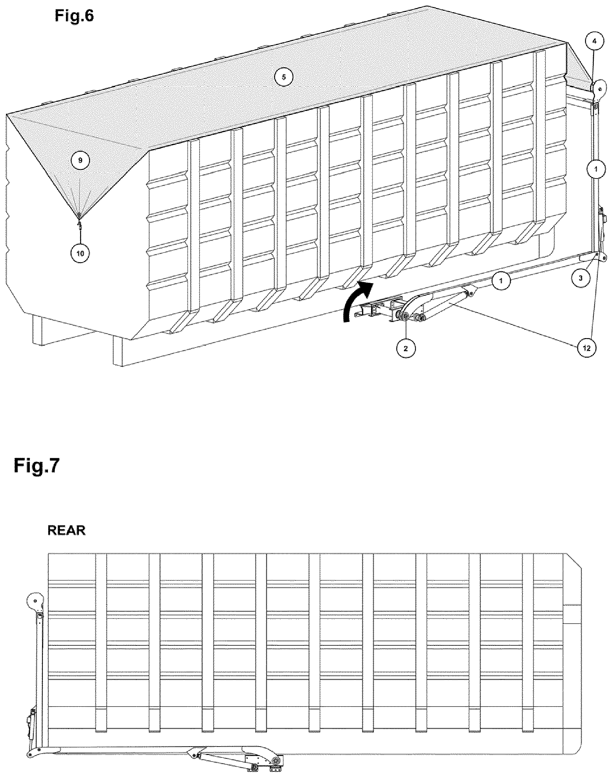

In the embodiment shown, a rear to front covering setup is shown, which as the name suggests involves hooking the unsecured end 9 of the cover 5 onto a fixing point of the container 7. The next phase, therefore, involves moving the arms 1 forward which results in the cover 5 unfurling over the container's open top until the arms return to the position of the first phase, as indicated in Figure 6. This is the end of the operational mode.

At this point, the covering system 100 returns to the stowed mode in which the cylinders 6 retract the arms 1 inwardly so that their lower portions are located beneath the container which is now securely covered. The cylinders within the crossbar 8 likewise retract in sympathy.

In an alternative embodiment, a front to rear covering setup can be employed, which involves the end of the cover being fixed towards the front of the container. The same phases of separation and rearwards movement are performed as above, but in this case the operational mode continues the rearwards movement until the position shown in Figure 7 is reached. Here, the arms 1 assume the L-shape to the rear of the container 7 to cover it. At this point, the stowed mode is entered in which the cylinders 6 retract the arms inwardly.

The electromechanical control system allows user control of each phase which effects appropriate signals being sent to the cylinders which ensures the required movements.

A more detailed description will now be given.

Referring to the Figures, the framework is arranged to pivot about a first transverse axis 2, i.e. transverse to the longitudinal extent of the container or truck body, and has a secondary intermediate pivot 3 about which different portions of each arm articulate. The framework comprises the pair of opposed lateral arms 1, with an interconnecting rotatable spool bar 4. The rotatable spool bar 4 is employed to carry the flexible cover 5 which is wound around the bar, and movement of the arms in backwards and forwards directions, as will be explained, is used to retract and extend the cover.

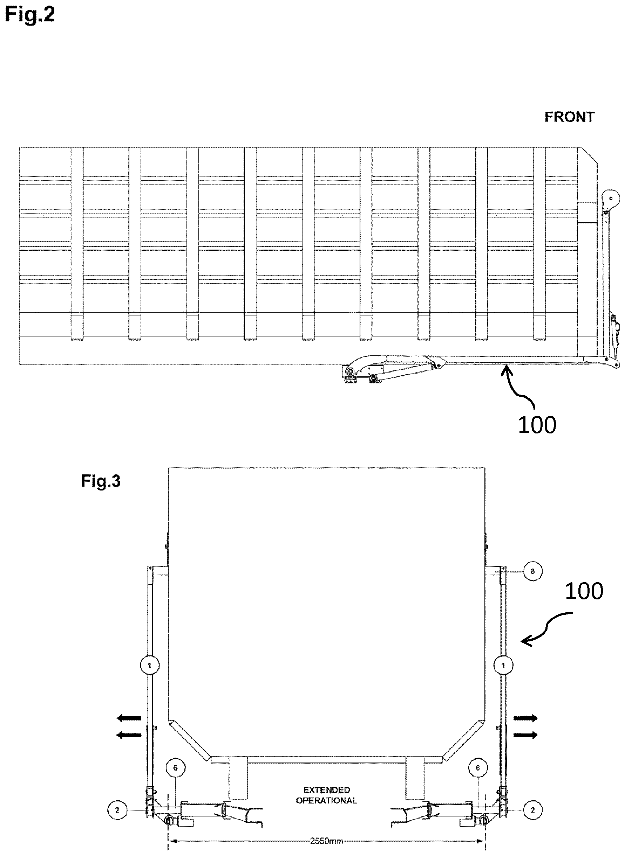

The framework is also arranged to extend and retract widthways, between a retracted, or stowed position as shown in Figure 4, and an operational position as shown in Figure 3. Particularly, the arms 1 when in the stowed position of Figure 4 are closer together than when in the operational position. In the operational position, the arms 1 can be moved back and forth as mentioned above. When in the stowed position, the arms are able to locate under and in front of the container or truck body, as in Figure 2, or under and behind, as in Figure 7.

Figures 1 and 2 show the framework when the arms 1 have been extended outwards to a first position at the start or end of an operational cycle. The framework as seen in Figure 2 is positioned under and in front of the container or truck body, substantially in an L- shape. Figure 3 is a top plan view of this position. Figure 4 is a plan view of the framework when in the stowed position, in which it will be seen that the lateral arms 1 are retracted inwardly towards each other. The arms are in this position located beneath the container or truck body, to within 2550 mm.

Turning now to the operating cycle, the operator causes selective movement of the framework rearwards, as shown in Figure 5. At this point, the operator connects the flexible cover 5 by means of a loop or similar connector to a fixed connector 10 on the container or truck body. Then, the operator causes movement of the framework forwards, to the position shown in Figure 6. This movement causes the rotatable bar 4 to rotate and the cover is unfurled to cover the open top of the container or truck body Next, the framework can be moved back to the stowed position indicated in Figure 4.

Figure 7 shows that the framework can be mounted so that the stowed position is behind the container or truck body, which can be used in a front to rear covering setup.

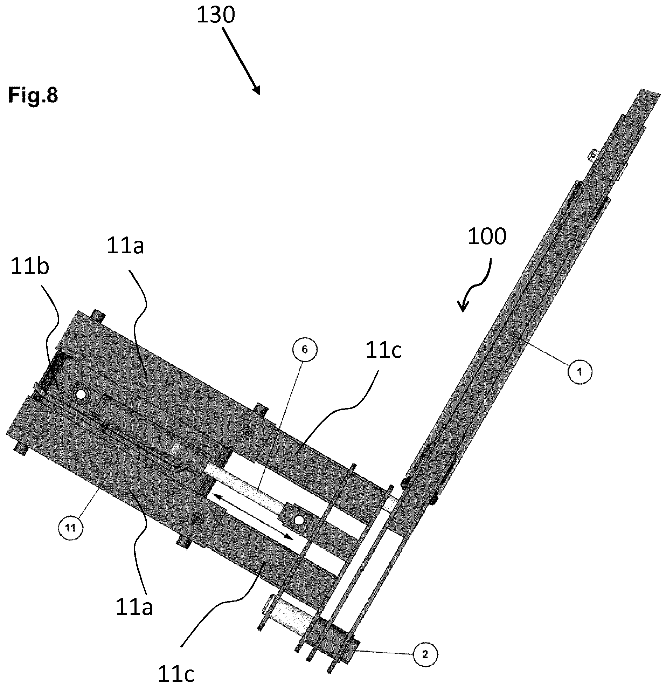

Figure 8 shows in greater detail one of the lower base structures 110 used for extending and retracting the associated arm 1 between the stowed position indicated in Figure 4 and the extended position indicated in Figure 3. The pivot point 2 is clearly indicated in this view. The structure of each base structure is described in greater detail below.

Figures 9a and 9b show the upper mechanism within the crossbar 8 of the framework used for stably extending and retracting the arms 1 between the stowed position indicated in Figure 4 and the extended position indicated in Figure 3.

The rotating spool 4 may be powered by any means, on which the flexible cover 5 can be both retracted and unfurled, and is permanently mounted between the moving framework.

The moving framework may hold a permanently mounted rotating spool 4 and is mounted to both sides of a vehicle or trailer and is stowed in a position so as to lay underneath and in front as in Figure 2 or underneath and behind the body or open top container as in Figure 7 and within or less than the width of 2550mm.

The moving framework may be stowed in a position so as to lay underneath and in front or underneath and behind the body or container and travels within or less than the width of 2550mm in either of these positions when both the container is covered and uncovered as in Figure 4.

The moving framework may be stowed within or less than 2550mm in width and uses a mechanism as in Figure 8 which extends and retracts the framework widthways by any means allowing the framework to cover a vehicle or trailer mounted container or truck body 7 before stowing once again within or less than 2550mm width position.

The moving framework may be stowed within or less than 2550mm in width and uses a mechanism as in Figure 9 which extends and retracts the crossbar widthways by any means allowing the framework to cover a vehicle or trailer mounted container or truck body before stowing once again within or less than 2550mm width position.

The moving framework may pivot on an axis 2 using any means both frontwards and rearwards in order to travel the length of the container 7 or truck body.

The moving framework may have a secondary pivot on an axis 3 to allow movement both frontwards and rearwards to further adjust the movement of the moving framework in order to allow the system operator to position the secondary pivoted section of the moving framework in to a position where the cover may be safely secured to a fixed point 10.

A flexible cover 5 secured at one end and rolled around the rotating spool 4 is held between the moving framework that is manipulated by any means using pivoting axis points to the opposite end of the container 7 allowing the unsecured end of the flexible cover 9 to be secured to a fixed point 10 onto the container or truck body 7 by any means. Once the unsecured end of the flexible cover 9 is secured to a fixed point 10 the moving framework is manipulated by any means using the pivoting axis points in a reverse action of the initial motion to cover the open top container or truck body 7 until the moving framework is returned to the stowed position so as to lay underneath and in front as in Figure 2 or underneath and behind the container as in Figure 7 with the flexible cover 5 secured at either end of the open container by both the fixed point 10 at one end and the rotating roller 4 at the other.

A lower telescopic base structure 130 mechanism is shown in Figure 8 which is seated in a position unhindered by the container, and is configured to extend and retract the arms 1 apart and together widthways using the cylinder 6 to push or pull, as required, in order to achieve the change in widthways separation. Two such base structures are provided.

The stability of this mechanism is provided by a telescopic box section 11, comprising two parallel sleeve arms 11a, which in use are fixed to the vehicle using a base plate 11b. Inside each sleeve arm 11a is a movable internal arm 11c, which is connected to the lateral arm 1. The sleeve and internal arms 11a, 11c are square or rectangular in cross section. Between these arms 11a, 11c is the central cylinder 6, allowing the system to extend and retract as described.

Referring to Figures 9a and 9b, two cylinders 120 (one being shown in the Figures) are concealed within the crossbar 8 at or near the ends and are able to extend and retract the upper ends of the arms 1 widthways, as the two Figures indicate, in synchronisation or sympathy with the cylinders 6 in the above-mentioned telescopic mechanism of Figure 8 mounted under the container 7 which moves the lower ends of said arms.

The cylinders 120 (with the stroke operating inwards so as to reduce the need for additional piping or wiring) are, as mentioned with reference to Figure 9, hidden within the box section of the crossbar 8 and so are protected against damage in operation . The piping or wiring of the four cylinders 6, 120 are connected to one function on the system's control box, not shown.

Once the main framework, including the spool 4, is extended, an over centre check valve on the cylinders 12 controls the framework 1 holding it in place and stops it moving under its own weight.

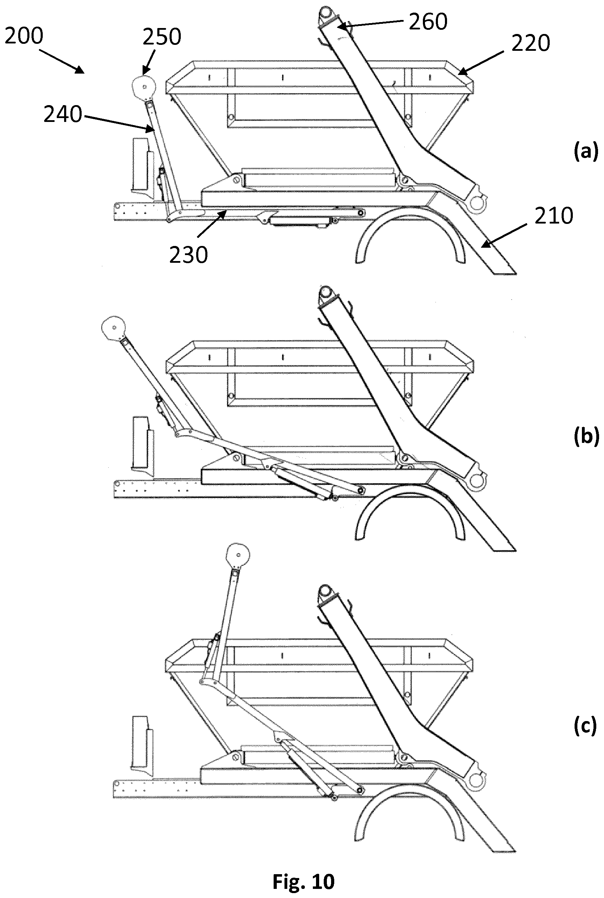

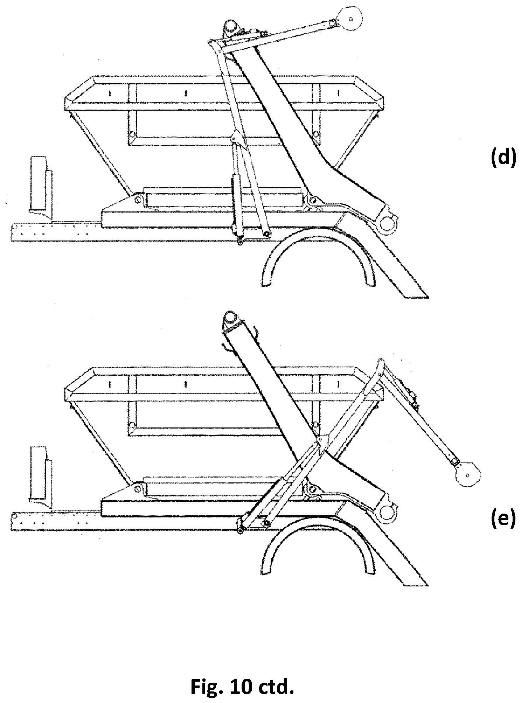

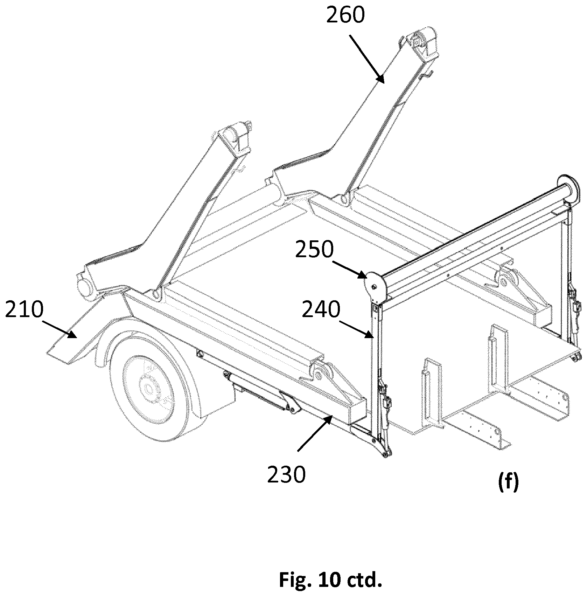

Figures 10(a) to 10(f) show a second embodiment covering system 200 mounted on a skip loader 210 shown here carrying a skip 220. The covering system 200 is the same as the first embodiment, except that the relative lengths of the lateral arm portions 230, 240 are different to ensure that in the operating phase the crossbar and spool 250 will pass over the skip-loader arms 260. Otherwise, the covering operation is the same. As Figure 10(a) shows, the stowed position of the arms may be slightly off the L-shape previously employed, which takes account of the shape of the skip 220.

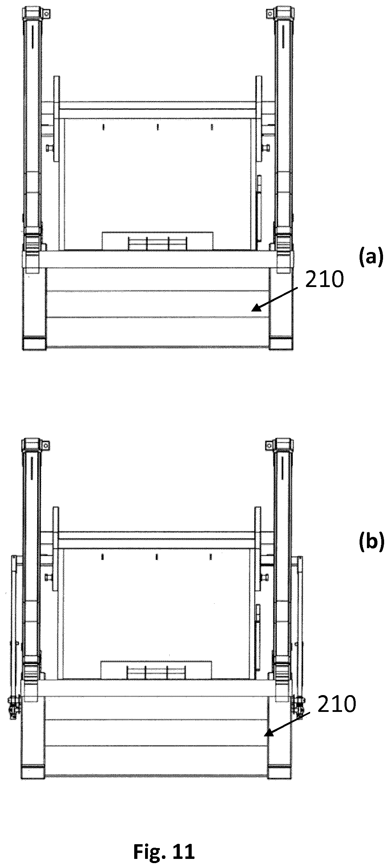

Figures 11(a) and 11(b) show the rear end of the skip loader 210 in respective stowed and operational positions, the arms being hidden from view in the former and extending either side when operational.

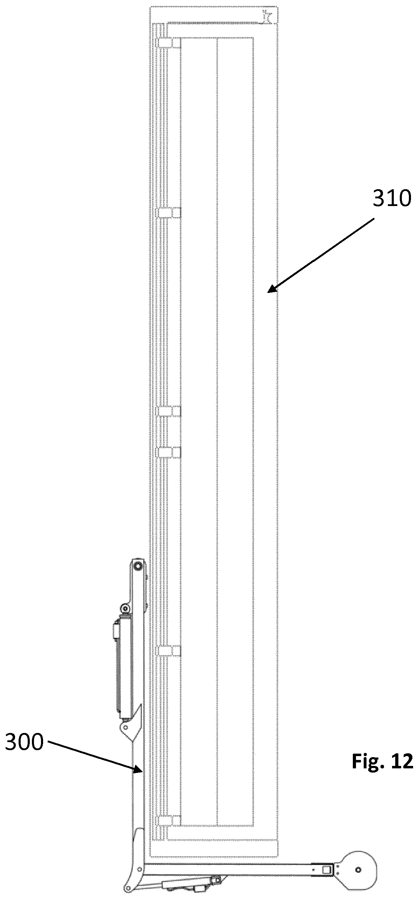

Figure 12 is a side view of a third embodiment covering system 300 mounted below a side tipper container 310. Again, this covering system 300 is the same as the previous ones, except that the relative lengths of the lateral arm portions are different to suit the dimensions of the container 310.

In summary, there have been described embodiments of vehicle mountable covering systems which enable convenient covering of open-topped units whilst the arms of the unit remain concealed and protected from damage in the stowed condition. By carrying the cover spool between the arms, a rather unique rear to front covering system is also provided.

It will be appreciated that the above described embodiments are purely illustrative and are not limiting on the scope of the invention as defined by the appended claims. Other variations and modifications will be apparent to persons skilled in the art upon reading the present application.

## Claims

1. A vehicle-mountable covering system (100) comprising a control system and a framework connected to the control system, the framework being comprised of first and second arms (1) with a rotatable spool (4) mounted to the arms for carrying a flexible cover (5), wherein the control system is operable to mechanically move the arms apart from each other from a stowed position to an operating position, and to move the arms about a first pivot axis (2) in either a forwards or rearwards direction in said operating position, **characterised in that** the rotatable spool is mounted on a crossbar (8) which at each end has a telescopic connection to a respective one of the framework arms, wherein each end of the crossbar has a hollow portion and housed within each hollow portion is a cylinder (6) having a movable part connected to a respective one of the framework arms and is arranged to move the arm outwards from the stowed position to the operating position, wherein each arm comprises at least two articulately-connected portions and an interconnecting cylinder for controlling the position of the arm portions with respect to one another, the cylinder being controlled during movement of the arms in the forwards or rearwards direction so as to move the arm portions relative to each other.

2. A covering system according to claim 1, wherein when in the stowed position, the arms are arranged to substantially assume an L-shape form, and are controlled by their respective cylinder to straighten as they move forwards or rearwards in the operating position.

3. A covering system according to any preceding claim, wherein movement of the arms from the stowed position to the operating position is affected by respective cylinders, each cylinder is mounted between first and second telescopic members (11) comprised of a fixed portion and a movable portion, the movable arm portions being connected to a framework arm.

4. A covering system according to any preceding claim, arranged such that when mounted on a vehicle carrying a container, skip or truck body, the arms when in the stowed position are positioned under, and in front of, or under and behind, the location of an open top container or truck body.

5. A covering system according to any preceding claim, wherein the framework is arranged such that, in use, the flexible cover is unfurled or retracted once the unattached end of the flexible cover has been attached to a fixed point.

6. A method of operating a covering system according to any of claims 1 to 5, comprising issuing a signal to the control system to extend the framework arms from a first position to a second position at the opposing end of the container or truck body, attaching the unattached end of a flexible cover to a fixed point, reversing the framework back to the first position thus allowing the permanently mounted rotatable spool to unfurl a flexible cover over the open top container or truck body and then retracting the framework widthways to the stowed position within a mounted width.

7. A covering system according to any of claims 1 to 6, wherein the arms are selectively movable widthways by means of a pair of lower and a pair of upper hydraulic cylinders, each cylinder having a movable part connected to one of the framework arms, the upper cylinders being housed within a crossbar extending between the arms.

8. A covering system according to claim 7, wherein each of the upper and lower pairs of hydraulic cylinders are operated by a single control system that causes each to move in sympathy.

9. A covering system according to any of claims 1 to 8, wherein each lateral arm is connected to a lower mechanism including a lower cylinder configured to extend and retract the arm widthways, and a telescopic support arrangement, the support arrangement being comprised of one or more telescopically-arranged sections positioned adjacent the lower cylinder and connected to the arm, the telescopic section(s) extending and retracting with movement of the lower cylinder.

10. A covering system according to claim 9, wherein a pair of telescopically-arranged sections are provided, one either side of the lower cylinder.

11. A covering system according to claim 9 or claim 10, wherein the or each telescopically arranged section comprises a first reinforced part for being connected underneath the container or truck body, and a second part located within the first part one end of which is connected to a lateral arm of the framework.

## Patentansprüche

1. Fahrzeugmontierbares Abdeckungssystem (100), umfassend ein Steuersystem und ein mit dem Steuersystem verbundenes Rahmenwerk, wobei das Rahmenwerk aus ersten und zweiten Armen (1) mit einer rotierbaren Spule (4) besteht, die zum Tragen einer flexiblen Abdeckung (5) an die Arme montiert ist, wobei das Steuersystem betrieben werden kann, um die Arme aus einer Stauposition in eine Betriebsposition mechanisch voneinander wegzubewegen, und die Arme um eine erste Schwenkachse (2) entweder in eine Vorwärts- oder eine Rückwärtsrichtung in der Betriebsposition zu bewegen, **dadurch gekennzeichnet, dass** die rotierbare Spule auf einem Querbalken (8) montiert ist, der an jedem Ende eine teleskopische Verbindung zu einem jeweiligen der Rahmenwerkarme aufweist, wobei jedes Ende des Querbalkens einen hohlen Abschnitt aufweist und in jedem hohlen Abschnitt ein Zylinder (6) beherbergt ist, der einen beweglichen Teil aufweist, der mit einem jeweiligen der Rahmenwerkarme verbunden ist und angeordnet ist, um die Arme aus der Stauposition in die Betriebsposition nach außen zu bewegen, wobei jeder Arm mindestens zwei gelenkig verbundene Abschnitte und einen Verbindungszylinder zum Steuern der Position der Armabschnitte bezüglich einander aufweist, wobei der Zylinder während der Bewegung der Arme in der Vorwärts- oder Rückwärtsrichtung gesteuert wird, um die Armabschnitte relativ zueinander zu bewegen.

2. Abdeckungssystem nach Anspruch 1, wobei in der Stauposition die Arme angeordnet sind, um im Wesentlichen eine L-förmige Form einzunehmen und durch ihren jeweiligen Zylinder gesteuert werden, um sich gerade zu richten, während sie sich nach vorne oder hinten in der Betriebsposition bewegen.

3. Abdeckungssystem nach einem der vorstehenden Ansprüche, wobei eine Bewegung der Arme aus der Stauposition in die Betriebsposition durch jeweilige Zylinder beeinflusst wird, wobei jeder Zylinder zwischen ersten und zweiten teleskopischen Elementen (11) montiert ist, die aus einem besestigten Abschnitt und einem beweglichen Abschnitt bestehen, wobei die beweglichen Armabschnitte mit einem Rahmenwerkarm verbunden sind.

4. Abdeckungssystem nach einem der vorstehenden Ansprüche, so angeordnet, dass, wenn es an ein einen Container, einen Kippbehälter oder einen Lkw-Aufbau tragendes Auto befestigt ist, die Arme, wenn sie in der Stauposition sind, unter und vor oder unter und hinter der Position eines oben offenen Containers oder Lkw-Aufbaus positioniert sind.

5. Abdeckungssystem nach einem der vorstehenden Ansprüche, wobei das Rahmenwerk so angeordnet ist, dass in Gebrauch die flexible Abdeckung entrollt oder zurückgezogen ist, sobald das nicht angebrachte Ende der flexiblen Abdeckung an einen festen Punkt angebracht wurde.

6. Verfahren zum Betreiben eines Abdeckungssystems nach einem der Ansprüche 1 bis 5, umfassend das Ausgeben eines Signals an das Steuersystem, die Rahmenwerkarme aus einer ersten Position in eine zweite Position am gegenüberliegenden Ende des Containers oder Lkw-Aufbaus auszufahren, wobei das nicht angebrachte Ende einer flexiblen Abdeckung an einen festen Punkt angebracht wird, wodurch das Rahmenwerk in die erste Position zurückgestellt wird und somit der permanent montierten rotierbaren Spule ermöglicht, eine flexible Abdeckung über den offenen Container oder Lkw-Aufbau auszurollen und das Rahmenwerk dann in Breitenrichtung innerhalb einer montierten Breite in die Stauposition zurückzuziehen.

7. Abdeckungssystem nach einem der Ansprüche 1 bis 6, wobei die Arme mittels eines Paars unterer und eines Paars oberer Hydraulikzylinder selektiv in Breitenrichtung bewegt werden können, wobei jeder Zylinder einen beweglichen Teil an einen der Rahmenwerkarme verbunden hat, wobei die oberen Zylinder in einem sich zwischen den Armen erstreckenden Querbalken aufgenommen sind.

8. Abdeckungssystem nach Anspruch 7, wobei jedes der oberen und unteren Paare von Hydraulikzylindern durch ein einzelnes Steuersystem betrieben werden, das jeden dazu veranlasst, sich im Einklang zu bewegen.

9. Abdeckungssystem nach einem der Ansprüche 1 bis 8, wobei jeder laterale Arm mit einem unteren Mechanismus verbunden ist, enthaltend einen unteren Zylinder, der konfiguriert ist, den Arm in Breitenrichtung auszufahren und zurückzuziehen, und eine teleskopische Stützanordnung, wobei die Stützanordnung aus einem oder mehreren teleskopisch angeordneten Abschnitt(en) besteht, die angrenzend an den unteren Zylinder angeordnet und mit dem Arm verbunden sind, wobei sich der/die teleskopischen Abschnitt(e) mit der Bewegung des unteren Zylinders ausfahren und zurückziehen.

10. Abdeckungssystem nach Anspruch 9, wobei ein Paar teleskopisch angeordneter Abschnitte bereitgestellt ist, einen auf jeder Seite des unteren Zylinders.

11. Abdeckungssystem nach Anspruch 9 oder Anspruch 10, wobei der oder jeder teleskopisch angeordnete Abschnitt einen ersten verstärkten Teil umfasst, um unter dem Container oder Lkw-Aufbau verbunden zu werden, und einen zweiten Teil, der sich im ersten Teil befindet, von dem ein Ende mit einem lateralen Arm des Rahmenwerks verbunden ist.

## Revendications

1. Système de recouvrement à monter sur un véhicule (100) comprenant un système de commande et une armature reliée au système de commande, l'armature comprenant des premier et second bras (1) avec une bobine rotative (4) montée sur les bras destinée à supporter une couverture souple (5), ledit système de commande servant à écarter mécaniquement les bras les uns des autres à partir d'une position repliée jusqu'à une position de fonctionnement et à déplacer les bras autour d'un premier axe de pivotement (2) dans un sens vers l'avant ou vers l'arrière dans ladite position de fonctionnement, **caractérisé en ce que** la bobine rotative est montée sur une traverse (8) qui possède à chaque extrémité un raccord télescopique avec l'un des bras d'armature respectif, chaque extrémité de la traverse possédant une partie creuse et un cylindre (6), logé à l'intérieur de chaque partie creuse, possédant une partie mobile raccordée à un bras respectif des bras d'armature et étant agencé pour déplacer le bras vers l'extérieur à partir de la position repliée jusqu'à la position de fonctionnement, chaque bras comprenant au moins deux parties raccordées de manière articulée et un cylindre de raccordement destiné à commander la position des parties de bras l'une par rapport à l'autre, le cylindre étant commandé durant le mouvement des bras dans le sens vers l'avant ou vers l'arrière de façon à déplacer les parties de bras l'une par rapport à l'autre.

2. Système de recouvrement selon la revendication 1, lorsqu'ils sont dans la position repliée, lesdits bras étant agencés pour prendre sensiblement une forme en L et étant commandés par leur cylindre respectif pour se redresser tandis qu'ils se déplacent vers l'avant ou vers l'arrière dans la position de fonctionnement.

3. Système de recouvrement selon l'une quelconque des revendications précédentes, ledit mouvement des bras à partir de la position repliée jusqu'à la position de fonctionnement étant affecté par les cylindres respectifs, chaque cylindre étant monté entre des premier et second éléments télescopiques (11) comprenant une partie fixe et une partie mobile, lesdites parties de bras mobiles étant raccordées à un bras d'armature.

4. Système de recouvrement selon l'une quelconque des revendications précédentes, agencé de sorte que, lorsqu'ils sont montés sur un véhicule transportant un conteneur, une benne ou une carrosserie de camion, lesdits bras en position repliés étant positionnés sous et devant, ou sous et derrière, l'emplacement d'un conteneur à toit ouvert ou d'une carrosserie de camion.

5. Système de recouvrement selon l'une quelconque des revendications précédentes, ladite armature étant agencée de sorte que, lors de l'utilisation, la couverture souple soit déployée ou rétractée une fois que l'extrémité non fixée de la couverture souple a été fixée à un point fixe.

6. Procédé de fonctionnement d'un système de recouvrement selon l'une quelconque des revendications 1 à 5, comprenant l'émission d'un signal au système de commande pour étendre les bras d'armature à partir d'une première position jusqu'à une seconde position au niveau de l'extrémité opposée du conteneur ou de la carrosserie de camion, fixant l'extrémité non fixée d'une couverture souple en un point fixe, faisant revenir l'armature dans sa première position, permettant ainsi à la bobine montée rotative en permanence de déployer une couverture souple sur le conteneur à toit ouvert ou sur la carrosserie de camion, et ensuite de rétracter l'armature dans le sens de la largeur jusqu'à la position repliée dans les limites d'une largeur montée.

7. Système de recouvrement selon l'une quelconque des revendications 1 à 6, lesdits bras étant mobiles sélectivement dans le sens de la largeur au moyen d'une paire de cylindres hydrauliques inférieurs et d'une paire de cylindres hydrauliques supérieurs, chaque cylindre possédant une partie mobile raccordée à l'un des bras d'armature, lesdits cylindres supérieurs étant logés à l'intérieur d'une traverse s'étendant entre les bras.

8. Système de recouvrement selon la revendication 7, chacune des paires supérieure et inférieure de cylindres hydrauliques étant actionnée par un système de commande unique qui entraîne leur déplacement à l'unisson.

9. Système de recouvrement selon l'une quelconque des revendications 1 à 8, chaque bras latéral étant raccordé à un mécanisme inférieur comprenant un cylindre inférieur conçu pour étendre et rétracter le bras dans le sens de la largeur, et à un agencement de support télescopique, ledit agencement de support comprenant un ou plusieurs sections agencées de manière télescopique positionnées adjacentes au cylindre inférieur et raccordées au bras, ladite ou lesdites sections télescopiques s'étendant et se rétractant avec le mouvement du cylindre inférieur.

10. Système de recouvrement selon la revendication 9, une paire de sections agencées de manière télescopique étant disposées, d'un côté ou de l'autre du cylindre inférieur.

11. Système de recouvrement selon la revendication 9 ou 10, ladite ou chaque section agencée de manière télescopique comprenant une première partie renforcée destinée à être raccordée sous le conteneur ou la carrosserie de camion, et une seconde partie située dans la première partie dont une extrémité est raccordée à un bras latéral de l'armature.
